# FASCICULE DE BREVET EUROPEEN

(11) **EP 0 516 528 B1**
(45) Date de publication et mention de la délivrance du brevet: **22.06.1994**
(21) Numéro de dépôt: 92401436.8
(22) Date de dépôt: 26.05.1992
(51) Int. Cl.: F16K 24/04, F16K 17/36

(54) **Clapet de sécurité pour circuit de ventilation d'un réservoir de carburant de véhicule automobile**
Sicherheitsventil für den Entlüftungskreislauf eines Kfz-Kraftstoffbehälters
Safety valve for the ventilation of a fuel tank of a motor vehicle

(30) Priorité: 29.05.1991 FR 9106463
(43) Date de publication de la demande: 02.12.1992
(73) Titulaire: PAUL JOURNEE S.A., F-92707 Colombes Cédex (FR)
(72) Inventeur: Journée, Maurice, F-60240 Reilly (FR); Romanek, Christian, F-60430 Noailles (FR)
(74) Mandataire: Lemaire, Marc

(56) Documents cités:
- FR-A- 2 628 368
- GB-A- 1 571 449
- GB-A- 1 593 230
- US-A- 3 834 415
- US-A- 3 860 026
- US-A- 5 004 002

## Description

La présente invention est relative à un clapet de sécurité destiné à être interposé dans un circuit de ventilation d'un réservoir de carburant de véhicule automobile.

Un circuit de ventilation d'un réservoir de carburant de véhicule automobile comporte, pour assurer la mise à l'air libre de la cavité supérieure du réservoir un conduit de mise à l'air libre qui relie cette cavité à l'atmosphère à travers un clapet de sécurité dont le boîtier est généralement porté par la face supérieure du réservoir et qui comporte un flotteur monté mobile à l'intérieur du boîtier de clapet.

Différents exemples de réalisation d'un tel type de clapet de sécurité sont décrits et représentés dans le document FR-A-2 628 368.

Les clapets illustrés dans ce document sont du type comportant un boîtier de clapet muni d'un orifice inférieur d'entrée relié au réservoir de carburant et d'un orifice supérieur de sortie relié à un conduit de mise à l'air libre et dans lequel est agencé le flotteur monté mobile verticalement entre une position basse dans laquelle l'orifice de sortie est ouvert et une position haute dans laquelle une portion du flotteur formant obturateur est en appui étanche contre une portion en vis-à-vis du boîtier formant siège de clapet de manière à interrompre la circulation dans le circuit de ventilation lorsque le niveau du carburant à l'intérieur du boîtier atteint une valeur prédéterminée.

Un clapet de sécurité de ce type permet d'empêcher que le carburant sorte accidentellement du réservoir, par exemple en cas de coup de bélier dans le circuit d'alimentation en carburant ou bien dans le cas d'un accident au cours duquel le véhicule se trouve en position inclinée, par exemple lorsqu'il est couché sur le côté, ou en position complètement renversée.

Lorsqu'une telle circonstance se produit, le niveau du carburant qui pénètre dans le boîtier du clapet par l'orifice d'entrée augmente rapidement et provoque, du fait de la poussée d'archimède, un déplacement du flotteur vers sa position haute jusqu'à ce que l'orifice de sortie soit obturée.

On constate parfois lors de l'utilisation d'un tel type de clapet que, à l'issue d'une telle phase d'obturation, le flotteur reste en position haute d'obturation malgré l'évacuation finale du carburant hors du boîtier du clapet par l'orifice d'entrée. Ce phénomène résulte d'un "collage" de la portion du flotteur formant obturateur contre la portion du boîtier formant siège de clapet.

Il apparaît nécessaire de remédier à cet inconvénient pour éviter que, toutes les autres conditions d'utilisation du véhicule étant normales par ailleurs, le conduit de mise à l'air libre soit obturé ce qui aboutit inévitablement à une augmentation subite de la pression dans le réservoir avec des risques de déformation de ce réservoir et éventuellement d'explosion étant donné les débits gazeux très élevés qui doivent être évacués par le circuit de ventilation et qui sont le plus souvent supérieurs à 2000 litres/heure.

Afin de remédier à cet inconvénient, la présente invention propose un clapet du type mentionné précédemment, dans lequel le flotteur comporte un passage qui relie l'intérieur du boîtier au conduit de mise à l'air libre et dans lequel est agencée une valve de sécurité normalement fermée dont l'ouverture est commandée lorsque, le flotteur étant en position haute, la pression régnant à l'intérieur du boîtier est supérieure à une valeur prédéterminée, et dans lequel l'organe de fermeture de la valve est relié à un piston monté coulissant de manière étanche dans un alésage interne du flotteur dans lequel il délimite une chambre de commande qui communique avec l'intérieur du boîtier et une chambre de rappel dans laquelle est disposé un moyen élastique taré de rappel qui sollicite le piston dans la direction correspondant à la fermeture de la valve .

Selon d'autres caractéristiques préférées du clapet selon l'invention :
- le passage comporte un tronçon de sortie qui traverse la portion du flotteur formant obturateur pour mettre le conduit de mise à l'air libre en communication avec la chambre de commande et un tronçon d'entrée qui met l'intérieur du boîtier en communication avec le tronçon de sortie dans lequel il débouche transversalement, et l'élément de fermeture de valve est constitué par une tige du piston reçue en coulissement dans le tronçon de sortie ;
- la tige du piston coulisse de manière étanche dans le tronçon de sortie et obture l'extrémité du tronçon d'entrée qui débouche dans le tronçon de sortie lorsque la valve est en position fermée ;
- la tige est reçue en coulissement avec un jeu radial dans le tronçon de sortie et l'extrémité de la tige coopère avec un siège de valve formé dans le tronçon de sortie ;
- le boîtier de clapet et le flotteur sont deux pièces de forme sensiblement cylindrique agencées coaxialement.

D'autres caractéristiques et avantages apparaîtront à la lecture de la description détaillée qui va suivre, donnée à titre d'exemples non limitatifs, dont la compréhension sera facilitée par les dessins annexés dans lesquels :
- La figure 1 est une vue en coupe axiale d'un premier mode de réalisation d'un clapet de sécurité conforme aux enseignements de l'invention illustré en position de repos ;
- la figure 2 est une vue similaire à celle de la figure 1 dans laquelle le clapet est illustré en position haute du flotteur, la valve de sécurité étant en position ouverte ; et
- les figures 3 et 4 sont des vues similaires à celles des figures 1 et 2 qui illustrent un second mode de réalisation d'un clapet conforme aux enseignements de l'invention.

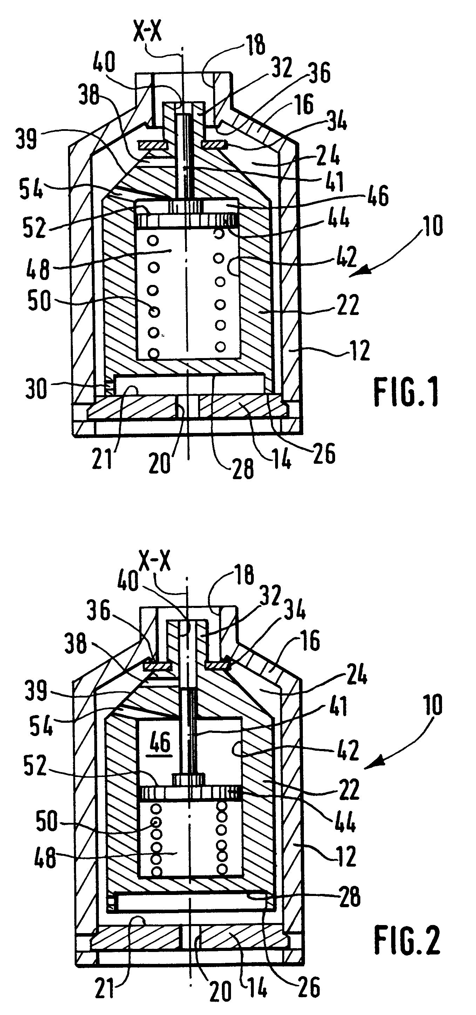

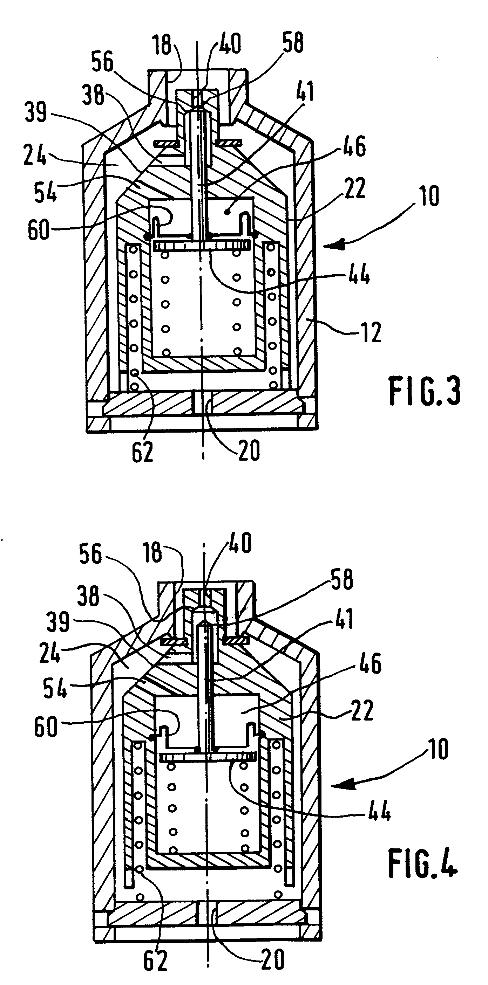

Le clapet 10 illustré aux figures 1 et 2 comporte un bottier cylindrique 12 fermé à sa partie inférieure par un fond encliqueté 14.

La partie supérieure du boîtier de clapet 12 présente un profil conique 16 et se prolonge par une portion d'un conduit tubulaire 18 qui constitue l'orifice de sortie du clapet qui est prévu pour être relié au conduit de mise à l'air libre d'un réservoir de carburant (non représenté).

Le fond 14 du boîtier 12 est percé en son centre d'un trou 20 qui constitue l'orifice d'entrée du clapet qui est prévu pour être relié à la cavité interne du réservoir de carburant.

Le clapet 10 comporte un flotteur 22 de forme générale cylindrique qui est monté à l'intérieur de la cavité interne 24 du boîtier de clapet 12 coaxialement à l'axe X-X de ce dernier. Le fond 26 du flotteur 12, qui dans la position de repos illustrée à la figure 1 est en appui sur la face supérieure 21 du fond 20 du bottier 12, comporte un évidement 28 dans lequel débouche l'orifice d'entrée 20 et qui est mis en communication avec l'espace annulaire 24 délimité par la paroi interne cylindrique du boîtier 12 et par la paroi externe cylindrique du flotteur 22, par une série de trous radiaux 30.

On comprend ainsi aisément que, au cas où du carburant pénètre dans le boîtier de clapet 12 par l'orifice d'entrée 20, il provoque progressivement le déplacement vertical, en considérant la figure 1, du flotteur 22 par rapport au bottier 12 sous l'effet de la poussée d'archimède qui lui est appliquée par le carburant.

Le déplacement vertical du flotteur 22 par rapport au boîtier 12 depuis sa position basse illustrée à la figure 1 a pour effet de l'amener progressivement jusqu'à sa position haute, dite d'obturation, illustrée à la figure 2.

Dans cette position haute, la portion supérieure 32 du flotteur peut être équipée d'une coupelle d'obturation 34 venant en appui contre le siège de clapet 36 formé dans la paroi interne de la portion supérieure 16 du bottier de clapet 12 au voisinage de son raccordement avec la portion de conduit 18.

Dans la position haute, illustrée à la figure 2, la coopération de la coupelle 34 formant obturateur avec le siège 36 a pour effet de provoquer l'obturation du conduit 18.

C'est cet état d'obturation qui est utilisé pour éviter le déversement du carburant dans le conduit de mise à l'air libre en cas de coup de bélier ou de renversement du véhicule.

Il est prévu des moyens pour permettre de mettre le conduit de mise à l'air libre 18 en communication avec l'espace interne 24 du boîtier de clapet 12 lorsque, toutes les conditions étant normales par ailleurs, le flotteur 22 est resté en position haute, tel qu'illustré à la figure 2, sous l'effet d'un phénomène de collage entre les parties 34 et 36.

A cet effet un passage constitué de deux tronçons est formé dans le flotteur 22.

Le passage est constitué par un tronçon d'entrée 38 qui s'étend transversalement, c'est-à-dire sensiblement selon un rayon, depuis la surface externe 39 de la partie supérieure du flotteur 22 jusqu'à un tronçon de sortie 40 dans lequel il débouche transversalement.

L'association des deux tronçons 38 et 40 constitue donc un passage qui met en communication l'espace interne 24 avec la portion de conduit 18.

En effet, le tronçon de sortie 40 est coaxial au flotteur 22 et débouche directement dans la portion de conduit 18.

L'extrémité inférieure du tronçon de sortie 40 débouche dans un alésage cylindrique fermé 42 qui est formé à l'intérieur du flotteur 22.

Selon l'invention, un piston 44 est monté coulissant de manière étanche dans l'alésage 42 de manière à y délimiter une chambre de travail 46 et une chambre de rappel 48.

Un ressort hélicoïdal de compression 50 est monté dans la chambre de rappel 48 pour solliciter élastiquement le piston 44 vers le haut en considérant les figures 1 et 2.

La face supérieure 52 du piston 44 comporte une tige 41 qui constitue un éliment de fermeture de valve qui a pour fonction de provoquer l'obturation ou l'ouverture du passage constitué par les deux conduits 38 et 40.

Sous l'action du ressort taré 50, la tige de valve 41 est en position normalement fermée telle qu'illustrée à la figure 1 dans laquelle la communication entre l'espace interne 24 et le conduit 18 est normalement fermée.

Dans la position haute illustrée à la figure 2, et si la pression continue d'augmenter à l'intérieur de l'espace interne 24, la pression va augmenter simultanément dans la chambre de commande 46 du fait du trou transversal 54 formé dans le flotteur 22 qui relie l'espace interne 24 à la chambre de commande 46.

Sous l'effet de l'action de la pression qui agit sur la face supérieure 52 du piston 44, ce dernier se déplace dans l'alésage 42 à l'encontre de l'effort de rappel qui lui est appliqué par le ressort 50 jusqu'à ce que la tige 41 atteigne sa position illustrée à la figure 2 dans laquelle le passage constitué par les tronçons d'entrée 38 et de sortie 40 est ouvert.

L'espace interne 24, et donc la partie supérieure du réservoir de carburant, est alors à nouveau en communication avec le conduit de mise à l'air libre du circuit de ventilation du réservoir.

Le décollement de l'obturateur 34 de son siège 36 peut alors se produire, par exemple sous l'effet des vibrations de roulement de la caisse du véhicule et ceci du fait qu'il n'existe plus aucun effort appliqué au flotteur tendant à le solliciter verticalement vers le haut en position haute ou du fait de la baisse de pression dans la chambre 24.

A l'issue du retour à l'équilibre des pressions le flotteur peut donc revenir à sa position normale de repos tel qu'il est illustré à la figure 1.

A titre de variante non représentée aux figures 1 et 2, le ressort 50 peut être omis, la fonction de rappel étant assurée par le ressort pneumatique constitué par la coopération étanche du piston 44 avec la paroi de l'alésage 42 qui a pour effet d'enfermer une quantité d'air compressible dans la chambre de rappel 48.

On décrira maintenant la variante de réalisation illustrée aux figures 3 et 4. Pour cette description, on utilisera les mêmes chiffres de référence pour désigner les éléments identiques ou équivalents à ceux illustrés aux figures 1 et 2.

Tandis que dans le mode de réalisation illustré aux figures 1 et 2, la tige 41 coulissait de manière étanche à l'intérieur du tronçon de sortie 40, on constate que, dans le mode de réalisation illustré aux figures 3 et 4, la tige 41 coulisse avec un jeu radial dans le tronçon de sortie 40. Le tronçon de sortie 40 comporte, au voisinage de son extrémité supérieure, un siège conique de valve 56 avec lequel coopère l'extrémité libre 58 de la tige 41 qui constitue l'élément de fermeture de valve.

Ce mode de réalisation permet d'obtenir une ouverture plus rapide de la valve de sécurité lorsque la pression augmente dans la chambre de commande 46.

On constate également que l'étanchéité du piston 44 par rapport à la paroi de l'alésage 42 est assurée au moyen d'une membrane souple 60 qui constitue un diaphragme roulant.

Selon une caractéristique connue de l'art antérieur, le flotteur 22 est également équipé d'un ressort de tarage 62.

## Revendications

1. Clapet (10) destiné à être interposé dans un circuit de ventilation de réservoir de carburant de véhicule automobile du type comportant un bottier de clapet (12) muni d'un orifice inférieur d'entrée (20) relié au réservoir de carburant et d'un orifice supérieur de sortie (18) relié à un conduit de mise à l'air libre et dans lequel est agencé un flotteur (22) monté mobile verticalement entre une position basse dans laquelle l'orifice de sortie (18) est ouvert et une position haute dans laquelle une portion (34) du flotteur (22) formant obturateur est en appui étanche contre une portion en vis-à-vis (36) du boîtier de clapet (12) formant siège de clapet de manière à interrompre la circulation dans le circuit de ventilation lorsque le niveau du carburant à l'intérieur (24) du boîtier (12) atteint une valeur prédéterminée, caractérisé en ce que le flotteur (22) comporte un passage (38, 40) qui relie l'intérieur (24) du bottier (12) au conduit (18) de mise à l'air libre et dans lequel est agencée une valve de sécurité (44, 41) normalement fermée dont l'ouverture est commandée lorsque, le flotteur (22) étant en position haute, la pression régnant à l'intérieur (24) du boîtier (12) est supérieure à une valeur prédéterminée, et en ce que l'organe de fermeture (41) de la valve est relié à un piston (44) monté coulissant de manière étanche dans un alésage interne (42) du flotteur (22) dans lequel il délimite une chambre de commande (46) qui communique avec l'intérieur (24) du boîtier et une chambre de rappel (48) dans laquelle est disposé un moyen élastique taré de rappel (50) qui sollicite le piston (44) dans la direction correspondant à la fermeture de la valve.

2. Clapet selon la revendication 1, caractérisé en ce que le passage (38, 40) comporte un tronçon de sortie (40) qui traverse la portion du flotteur formant obturateur pour mettre le conduit de mise à l'air libre (18) en communication avec la chambre de commande (46) et un tronçon d'entrée qui met l'intérieur du boîtier (24) en communication avec le tronçon de sortie (40) dans lequel il débouche transversalement, et en ce que l'élément de fermeture de valve (41) est constitué par une tige du piston (44) reçue en coulissement dans le tronçon de sortie (40).

3. Clapet selon la revendication 2, caractérisé en ce que la tige (41) du piston (44) coulisse de manière étanche dans le tronçon de sortie (40) et obture l'extrémité du tronçon d'entrée (38) qui débouche dans le tronçon de sortie (40) lorsque la valve est en position fermée.

4. Clapet selon la revendication 2, caractérisé en ce que la tige (41) est reçue en coulissement avec un jeu radial dans le tronçon de sortie (40), et en ce que l'extrémité de la tige (58) coopère avec une siège de valve (56) formé dans le tronçon de sortie (40).

5. Clapet selon l'une quelconque des revendications 2 à 4, caractérisé en ce que le boîtier de clapet et le flotteur sont deux pièces de forme sensiblement cylindrique agencées coaxialement.

## Patentansprüche

1. Ventil (10) für den Einbau in einen Entlüftungskreislauf des Kraftstoffbehälters eines Kraftfahrzeugs, bestehend aus einem Ventilgehäuse (12) mit einer unteren Einlaßöffnung (20), die mit dem Kraftstoffbehälter verbunden ist, und einer oberen Auslaßöffnung (18), an die sich eine Entlüftungsleitung anschließt und in der ein Schwimmer (22) vertikal beweglich zwischen einer unteren Stellung, in der sich die Auslaßöffnung (18) öffnet, und einer oberen Stellung angebracht ist, in welcher ein als Verschluß dienender Abschnitt (34) des Schwimmers (22) dicht an einem gegenüberliegenden Abschnitt (36) des Ventilgehäuses (12) anliegt, der als Ventilsitz dient, so daß die Zirkulation in dem Entlüftungskreislauf unterbrochen wird, wenn der Füllstand des Kraftstoffs im Innern (24) des Gehäuses (12) einen vorgegebenen Wert erreicht , **dadurch gekennzeichnet,** daß der Schwimmer (22) einen Durchlaß (38, 40) aufweist, der das Innere (24) des Gehäuses (12) mit der Entlüftungsleitung (18) verbindet und in welchem ein normalerweise geschlossenes Sicherheitsventil (44, 41) angeordnet ist, dessen Öffnung betätigt wird, wenn der im Innern (24) des Gehäuses (12) herrschende Druck bei in oberer Stellung befindlichem Schwimmer (22) über einem vorgegebenen Wert liegt, und daß das Schließorgan (41) des Ventils mit einem Kolben (44) verbunden ist, der dicht verschiebbar in einer inneren Bohrung (42) des Schwimmers (22) eingesetzt ist, in dem er eine Betätigungskammer (46) begrenzt, die mit dem Innern (24) des Gehäuses in Verbindung steht, sowie eine Rückstellkammer (48), in der ein voreingestelltes elastisches Rückstellmittel (50) angeordnet ist, das den Kolben (44) in der Richtung beansprucht, die der Schließung des Ventils entspricht.

2. Ventil nach Anspruch 1 , **dadurch gekennzeichnet,** daß der Durchlaß (38, 40) ein Auslaßteilstück (40) umfaßt, das durch den als Verschluß dienenden Abschnitt des Schwimmers hindurchgeht, um die Entlüftungsleitung (18) mit der Betätigungskammer (46) in Verbindung zu setzen, sowie ein Einlaßteilstück (38), welches das Innere (24) des Gehäuses mit dem Auslaßteilstück (40) in Verbindung setzt, in das es quer einmündet, und daß das Ventilschließelement (41) durch einen Schaft des Kolbens (44) gebildet wird, welcher verschiebbar in dem Auslaßteilstück (40) eingesetzt ist.

3. Ventil nach Anspruch 2 , **dadurch gekennzeichnet,** daß der Schaft (41) des Kolbens (44) dicht in dem Auslaßteilstück (40) verschiebbar ist und das Ende des Einlaßteilstücks (38) verschließt, das in das Auslaßteilstück (40) einmündet, wenn sich das Ventil in geschlossener Stellung befindet.

4. Ventil nach Anspruch 2 , **dadurch gekennzeichnet,** daß der Schaft (41) mit einem radialen Spiel verschiebbar in dem Auslaßteilstück (40) eingesetzt ist und daß das Ende des Schaftes (58) mit einem Ventilsitz (56) zusammenwirkt, der in dem Auslaßteilstück (40) ausgeformt ist.

5. Ventil nach einem der Ansprüche 2 bis 4 , **da****durch gekennzeichnet,** daß das Ventilgehäuse und der Schwimmer als zwei Teile mit in etwa zylindrischer Form ausgeführt sind, die koaxial angeordnet sind.

## Claims

1. A valve (10) to be installed in a ventilation circuit of a fuel tank of a motor vehicle of the type comprising a valve housing (12) equipped with a lower inlet port (20) connected to the fuel tank and an upper outlet port (18) connected to a ventilator pipe and in which is disposed a float (22) mounted so that it can move vertically between a low position in which the outlet port (18) is open and a high position in which a portion (34) of the float (22) forming a seal tightly rests against an opposite portion (36) of the valve housing (12) forming a valve seat, so as to interrupt the circulation in the ventilation circuit when the level of the fuel inside the housing (12) reaches a predetermined value,
**characterised in that** the float (22) comprises a passage (38, 40) which connects the interior (24) of the housing (12) to the ventilator pipe (18) and in which is disposed a normally closed safety valve (44, 41), the opening of which is controlled when, the float (22) being in the high position, the pressure prevailing in the interior (24) of the housing (12) is greater than a predetermined value,
**and in that** the closing member (41) of the valve is connected to a piston (44) mounted so that it slides tightly in an internal bore (42) of the float (22) in which it delimits a control chamber (46) which communicates with the interior (24) of the housing and a drawback chamber (48) in which is disposed a calibrated elastic drawback means (50) which stresses the piston (44) in the direction corresponding to the closing of the valve.

2. A valve according to Claim 1,
**characterised in that** the passage (38, 40) comprises an outlet section (40) which passes through the portion of the float forming a seal in order to bring the ventilator pipe (18) into communication with the control chamber (46) and an inlet section which brings the interior of the housing (24) into communication with the outlet section (40) into which it transversally opens,
**and in that** the valve closing element (41) is formed by a rod of the piston (44) slidably housed in the outlet section (40).

3. A valve according to Claim 2,
**characterised in that** the rod (41) of the piston (44) slides in a tight manner in the outlet section (40) and shuts off the end of the inlet section (38) which opens into the outlet section (40) when the valve is in the closed position.

4. A valve according to Claim 2,
**characterised in that** the rod (41) is slidably housed with a radial clearance in the outlet section (40),
**and in that** the end of the rod (58) cooperates with a valve seat (56) formed in the outlet section (40).

5. A valve according to any one of Claims 2 to 4,
**characterised in that** the valve housing and the float are two substantially cylindrical pieces which are disposed coaxially.
